# EUROPÄISCHE PATENTSCHRIFT

(11) **EP 1 819 113 B1**
(45) Veröffentlichungstag und Bekanntmachung des Hinweises auf die Patenterteilung: **21.07.2010**
(21) Anmeldenummer: 07002172.0
(22) Anmeldetag: 01.02.2007
(51) Int. Cl.: H04L 12/64

(54) **Verfahren zur Datenübertragung über Datennetzwerke**
Method for data transmission via data networks
Procédé de transmission de données par des réseaux de données

(30) Priorität: 10.02.2006 DE 102006006508
(43) Veröffentlichungstag der Anmeldung: 15.08.2007
(73) Patentinhaber: ROBERT BOSCH GMBH, 70469 Stuttgart (DE)
(72) Erfinder: Schultze, Stephan, Dr., 97816 Lohr am Main (DE)

(56) Entgegenhaltungen:
- US-A1- 2002 064 157

## Beschreibung

Die vorliegende Erfindung bezieht sich auf Echtzeitkommunikationssysteme und insbesondere auf ethernetbasierte Datennetzwerke. Bei aus dem Stand der Technik bekannten Echtzeitkommunikationssystemen besteht das Problem, dass Standardethernetteilnehmer nicht direkt in das Kommunikationssystem integriert beziehungsweise Standardethernetteilnehmer nicht direkt an ein Echtzeitkommunikationssystem angekoppelt werden können. Die vorliegende Erfindung wird insbesondere in dem Bereich der ethernetbasierten Kommunikationssysteme beschrieben, wofür eine einfache Realisierung einer Koppelbaugruppe dargestellt wird.

Ein Echtzeitkommunikationssystem besteht im Wesentlichen aus einer Vielzahl von Teilnehmern. In einer speziellen Ausführungsform, die typischerweise in Automatisierungsanwendungen verwandt wird, weist das System Hauptteilnehmer (so genannte "Master") und Nebenteilnehmer (so genannte "Slaves") auf.

Innerhalb dieses Echtzeitkommunikationssystems werden Daten in Form von Echtzeittelegrammen ausgetauscht. Bei diesen Echtzeittelegrammen ist deren genaue Position entscheidend, um Informationen korrekt zusammenfügen zu können. Neben diesen Echtzeittelegrammen gibt es auch noch Datenaustauschmechanismen, die nicht in Echtzeit ablaufen. Diese Mechanismen werden beispielsweise zur Inbetriebnahme und zur Anzeige beziehungsweise zu Diagnosezwecken mit geringen zeitlichen Anforderungen eingesetzt.

Unter Echtzeitkommunikation wird eine Kommunikation verstanden, bei der vorgegebene Aktivitäten nahezu ohne Zeitverzögerung, d. h. üblicherweise mit einer garantierten und vorher anderen Systemen bekannten maximalen Verzögerung durchgeführt werden.

In derartigen Kommunikationssystemen besteht oft ein Bedarf, Zugriff auf die einzelnen Teilnehmer des Kommunikationssystems zu ermöglichen. Zu diesem Zweck werden im allgemeinen PCs eingesetzt, die keine direkte Ankopplung an das Echtzeitkommunikationssystem besitzen. Diese PCs müssen über Koppelbaugruppen an das System angekoppelt werden. Dabei erfolgt die Ankoppelung von PCs an das Kommunikationssystem beispielsweise durch Netzwerkteilnehmer. Auch ist es üblich, PCs am "Ethernet (Office)" anzukoppeln. Die Koppelfunktion wird dabei von einzelnen Echtzeitkommunikationsteilnehmern übernommen.

US 2002/0064157 A1 zeigt ein Verfahren gemäß dem Oberbegriff von Anspruch 1.

Der vorliegenden Erfindung liegt damit die Aufgabe zugrunde, ein Verfahren zur Datenübertragung zur Verfügung zu stellen, welches die Ankoppelung von Systemen oder Vorrichtungen erlaubt, welche nicht direkt in ein Echtzeitkommunikationssystem integriert werden können. Dies wird durch ein Verfahren nach Anspruch 1, eine Kommunikationsvorrichtung nach Anspruch 13 und eine Koppelbaugruppe nach Anspruch 17 erreicht. Vorteilhafte Ausführungsformen und Weiterbildungen sind Gegenstand der Unteransprüche.

Bei dem erfindungsgemäßen Verfahren zur Datenübertragung über Datennetzwerke und insbesondere über ethemetbasierte Datennetzwerke mit wenigstens zwei Teilnehmern, wobei die Datennetzwerke wenigstens einen topologischen Echtzeitbereich und einen topologischen Nichtechtzeitbereich aufweisen und über die Datennetzwerke versendete Datentelegramme wenigstens einen Echtzeitteil und wenigstens einen Nichtechtzeitteil aufweisen, werden erfindungsgemäß durch eine Koppelbaugruppe Datentelegramme aus dem Nichtechtzeitbereich, die innerhalb des Echtzeitteils eintreffen, zeitlich verzögert und in den Nichtechtzeitteil übertragen.

Die vorliegende Erfindung ist insbesondere auf wenigstens teilweise repeatende Datennetze bezogen. Dabei sind sowohl rein repeatende als auch gemischt repeatende und/oder geschaltete Datennetze denkbar. Vorzugsweise ist jedoch die Repeaterfunktionalität obligatorisch.

Unter einem topologischen Echtzeitbereich wird ein lokalisierbarer Bereich innerhalb des Datennetzes verstanden. Unter einen Echtzeitteil und einem Nichtechtzeitteil werden insbesondere aber nicht ausschließlich zeitliche Teile verstanden. Die einzelnen Echtzeit- oder Nichtechtzeitteile können jedoch auch durch eine Position innerhalb eines Kommunikationszyklus definiert sein.

Durch die zeitliche Verzögerung von Datentelegrammen aus dem Nichtechtzeitbereich und die Übertragung in den Nichtechtzeitteil können Konfliktsituationen bei echtzeitkritischen Kommunikationen verhindert werden. Dabei ist dieser Nichtechtzeitteil insbesondere in dem Echtzeitbereich relevant, d.h. demjenigen Bereich, in dem so genannte echtzeitkritische Daten übertragen werden.

Vorzugsweise werden auch Datentelegramme aus dem Nichtechtzeitteil (innerhalb des topologischen Echtzeitbereichs) entnommen und in den Nichtechtzeitbereich übertragen. Diese Vorgehensweise stellt die umgekehrte Übertragungsrichtung bezüglich der obigen Übertragung von Datentelegrammen aus dem Nichtechtzeitbereich in den Echtzeitbereich dar. Bevorzugt handelt es sich dabei bei denjenigen Datentelegrammen, die aus dem Nichtechtzeitbereich in den Echtzeitbereich übertragen werden und denjenigen Datentelegrammen, die aus dem Echtzeitbereich in den Nichtechtzeitbereich übertragen werden, um unterschiedliche Datentelegramme, wodurch veranschaulicht wird, dass Datentelegramme bidirektional übertragen werden können.

Bevorzugt werden auch Datentelegramme aus dem Echtzeitteil (innerhalb des Echtzeitbereichs) entnommen und in den Nichtechtzeitbereich übertragen. Auch in diesem Fall findet damit eine Übertragung von Datentelegrammen aus dem Echtzeitbereich in den Nichtechtzeitbereich statt.

Vorzugsweise werden die Daten in Form von Kommunikationszyklen übertragen, wobei besonders bevorzugt diese Kommunikationszyklen vorgegebene Zeitspannen aufweisen. Die Kommunikation in Echtzeitsystemen findet hier in den Kommunikationszyklen statt, wobei ein Kommunikationszyklus im Wesentlichen aus zwei Teilen besteht, nämlich dem Teil der Echtzeitkommunikation und dem Teil der Nichtechtzeitkommunikation. Der Teil der Echtzeitkommunikation beziehungsweise der Echtzeitteil (der im Folgenden auch als RT- Channel bezeichnet wird) wird typischerweise von dem Hauptteilnehmer verwaltet und die Sendeberechtigungen werden von diesem vergeben. Die Datentelegramme in diesem RT-Channel werden von den Teilnehmern vorzugsweise repeatet.

Daneben existiert ein so genannter Nichtechtzeitteil (im Folgenden auch als IP-Channel bezeichnet) bei dem es sich um einen Zeitbereich handelt, währenddessen keine Sendeberechtigungen vorgegeben werden. In diesem Zeitbereich kann jeder Teilnehmer das Kommunikationssystem belegen. Um in diesem IP-Channel Kollisionen zu vermeiden, beziehungsweise zu reglementieren, kann von der Repeaterfunktion auf eine geschaltete Funktion für den Zeitraum des IP-Channels gewechselt werden (switching der Datentelegramme im IP-Channel). Innerhalb der Kommunikationszyklen tauchen sowohl zeitliche Echtzeitteile als auch zeitliche Nichtechtzeitteile auf.

Vorzugsweise ist der Nichtechtzeitteil innerhalb eines Kommunikationszyklus veränderbar festgelegt.

Bevorzugt ermittelt die Koppelbaugruppe Parameter, die für die Position wenigstens des Nichtechtzeitteils innerhalb eines Kommunikationszykluses charakteristisch sind. Genauer gesagt, werden diese Parameter erlernt. Vorzugsweise sind die Parameter aus einer Gruppe von Parametern ausgewählt, welche die Startzeitpunkte des Nichtechtzeitteils, die Endzeitpunkte des Nichtechtzeitteils, die zeitliche Länge des Nichtechtzeitteils, die zeitliche Länge des Echtzeitteils und dergleichen enthält. Insbesondere werden die Werte für den Startzeitpunkt des Nichtechtzeitteils und den Endzeitpunkt des Nichtechtzeitteils benötigt, um die Position des Nichtechtzeitteils zu bestimmen.

Vorteilhafterweise wird auch noch die zeitliche Länge des Nichtechtzeitteils bestimmt. Anhand dieser Parameter, d.h. anhand des Empfangszeitpunkts der Nichtechtzeittelegramme beziehungsweise der Echtzeittelegramme kann die Koppelbaugruppe auf den Zeitbereich des IP-Channels schließen, indem sie mittels der frühesten, der spätesten Empfangszeit und den jeweiligen Telegrammlängen den erlaubten Bereich für den IP-Channel berechnet. Da die Telegrammkennung der Echtzeittelegramme (RT-Channel) von denen im IP-Channel abweicht, kann die Koppelbaugruppe die Telegramme im Zeitbereich des IP-Channels von denen im Zeitbereich des RT-Channels unterscheiden. In anderen Worten, wird die Position des Nichtechtzeitteils durch Auswertung der Empfangszeitpunkte von empfangenen Telegrammen ermittelt.

Aus dem Stand der Technik sind keine Koppelbaugruppen bekannt, die mit einer Mischfunktion aus Repeater und Switch funktionieren. Koppelbaugruppen nach dem heutigen Stand müssen Parameter besitzen und beispielsweise von einem Hauptteilnehmer parametriert werden, damit sie die Lage des IP-Channels kennen. Dies bedeutet, dass die aus dem Stand der Technik bekannten Koppelbaugruppen jeweils eigenständige Netzwerkknoten sein müssen, die auch von der Hauptstation ansprechbar ist. D.h. es wird beispielsweise eine Netzwerkadresse benötigt, ein spezielles Management des Knotens ist nötig und auch eine Adresseinstellung des Knotens. Damit stellt das erfindungsgemäße Verfahren eine drastische Vereinfachung der aus dem Stand der Technik bekannten Verfahren dar.

Bevorzugt wird auch die Position des Nichtechtzeitteils durch Auswertung der Empfangszeitpunkte von empfangenen Datentelegrammen und besonders bevorzugt von Nichtechtzeittelegrammen ermittelt.

Die vorliegende Erfindung ist weiterhin auf eine Verwendung eines Verfahrens der oben beschriebenen Art für ethernetbasierte Kommunikationssysteme gerichtet. Daneben ist die vorliegende Erfindung auch auf eine Verwendung des oben beschriebenen Verfahrens für Echtzeitkommunikationssysteme im Allgemeinen gerichtet. Insbesondere ist die Erfindung auf die Verwendung eines Verfahrens der oben beschriebenen Art für ein wenigstens auch repeatendes Netzwerk gerichtet, d.h. ein Netzwerk, in dem nicht lediglich geschaltet (geswitcht) sondern zumindest auch repeatet wird. Damit ist die Erfindung auch auf rein repeatende Netzwerke anwendbar. Die hier dargestellten Prozesse laufen insbesondere in den unteren Schichten des OSI-Referenzmodells ab.

Die vorliegende Erfindung ist weiterhin auf eine Kommunikationsvorrichtung zur Übertragung von Daten gerichtet, wobei die Kommunikationsvorrichtung wenigstens einen ersten Teilnehmer und wenigstens einen zweiten Teilnehmer aufweist sowie eine Koppelbaugruppe zur Anbindung weiterer Teilnehmer an die Kommunikationsvorrichtung. Daneben weist die Kommunikationsvorrichtung wenigstens einen topologischen Echtzeitbereich und einen topologischen Nichtechtzeitbereich auf und von der Kommunikationsvorrichtung übertragende Datentelegramme weisen wenigstens einen insbesondere zeitlichen Echtzeitteil und einen insbesondere zeitlichen Nichtechtzeitteil auf.

Erfindungsgemäß weist die Koppelbaugruppe eine Steuerungseinrichtung auf, die bewirkt, dass Datentelegramme aus dem Nichtechtzeitbereich, die innerhalb des Echtzeitteils bei der Koppelbaugruppe eintreffen, zeitlich verzögert und in den Nichtechtzeitteil eines Kommunikationszykluses übertragen werden. Auf diese Weise kann eine störende Kollision mit echtzeitkritischen Daten verhindert werden.

Vorzugsweise bewirkt die Steuereinrichtung, dass Datentelegramme aus einem Nichtechtzeitteil entnommen und in den Nichtechtzeitbereich übertragen werden. Dies bedeutet, dass auch hier Datentelegramme aus dem Echtzeitbereich in den Nichtechtzeitbereich übertragen werden. Daneben wird durch die Steuereinrichtung auch bewirkt, dass Datentelegramme aus einem Echtzeitteil entnommen und in den Nichtechtzeitbereich übertragen werden. Der Begriff Datentelegramme kann im Rahmen der vorliegenden Erfindung sowohl einzelne Datentelegramme als auch jeweils Vielzahlen von Datentelegrammen beschreiben.

Vorzugsweise ermittelt die Koppelbaugruppe selbständig Parameter, die für die Position des Nichtechtzeitteils innerhalb eines Kommunikationszyklus charakteristisch sind.

Die vorliegende Erfindung ist weiterhin auf eine Koppelbaugruppe für eine Kommunikationsvorrichtung zur Übertragung von Daten über insbesondere ethernetbasierte Datennetzwerke mit einer Vielzahl von Teilnehmern gerichtet, die wenigstens einen Echtzeitbereich und wenigstens einen Nichtechtzeitbereich aufweist. Dabei enthalten die von der Kommunikationsvorrichtung übertragenen Datentelegramme wenigstens einen Echtzeitteil und einen Nichtechtzeitteil.

Erfindungsgemäß weist die Koppelbaugruppe eine Steuerungseinrichtung auf, die bewirkt, dass Datentelegramme aus dem Nichtechtzeitbereich, die innerhalb des zeitlichen Echtzeitteils bei der Koppelbaugruppe eintreffen, zeitlich verzögert und in den Nichtechtzeitzeil eingefügt werden.

Die vorliegende Erfindung ist weiterhin auf die Verwendung einer oben beschriebenen Koppelbaugruppe für ein wenigstens auch repeatendes Netzwerk gerichtet.

Weitere vorteilhafte Ausführungsformen ergeben sich aus den beigefügten Zeichnungen. Darin zeigen:
- Fig. 1: ein Blockdiagramm zur Veranschaulichung der Struktur, eines Echtzeitkommunikationssystems;
- Fig. 2: das Blockdiagramm aus Figur 1 zur Veranschaulichung der Datenflüsse;
- Fig. 3: aus dem Stand der Technik bekannte Ankoppelungen von Standardethernetteilnehmern;
- Fig. 4: eine Darstellung eines Kommunikationszyklus;
- Fig. 5: eine Darstellung zur Veranschaulichung der zeitlichen Parameter eines Kommunikationszyklus;
- Fig. 6: eine Abbildung einer Kommunikationsstruktur mit einem Router-Teilnehmer;
- Fig. 7: eine Darstellung eines Datenfeldes;
- Fig. 8: eine detaillierte Darstellung des Datenfeldes aus Fig. 7;

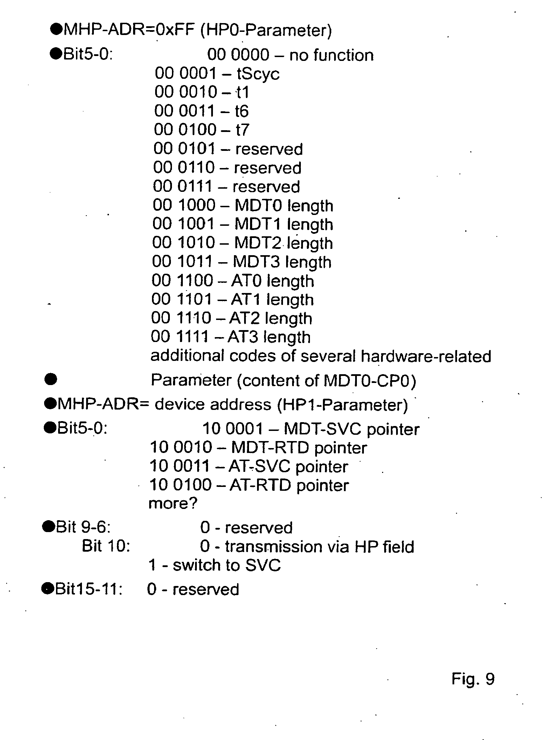

- Fig. 9: ein Beispiel für ein Steuerbefehlfeld (Control-Wort-Feld).

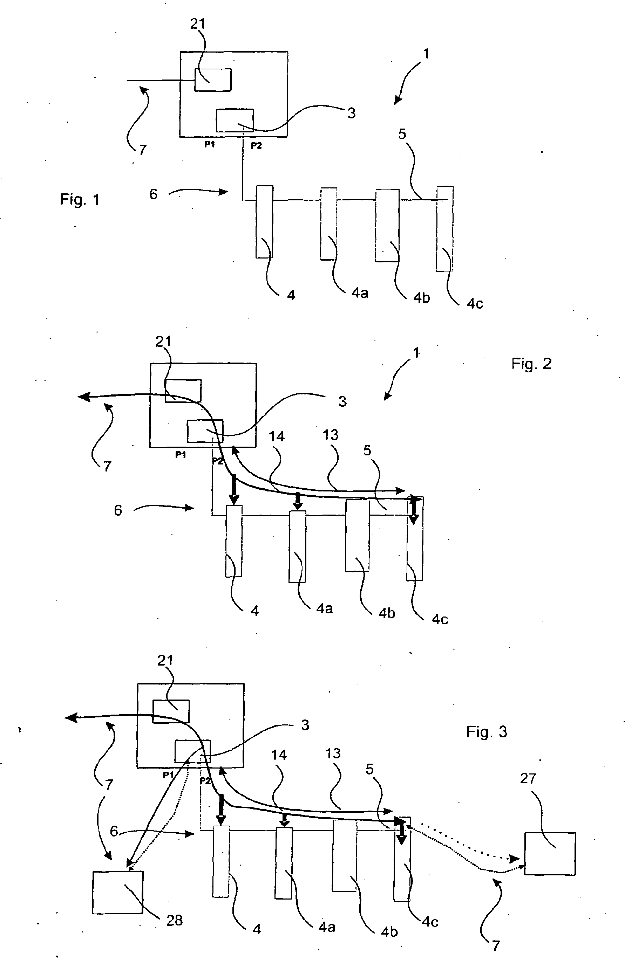

Figur 1 zeigt ein Blockdiagramm der Struktur eines Echtzeitkommunikationssystems 1, wie es insbesondere bei Automatisierungsanwendungen zum Einsatz kommt. Dieses System weist einen Hauptteilnehmer 3 und eine Vielzahl von Nebenteilnehmern 4, 4a, 4b, 4c auf. Zwischen diesem Hauptteilnehmer und den Nebenteilnehmern werden Daten in Form von Echtzeittelegrammen ausgetauscht. Damit bezieht sich das Bezugszeichen 6 auf einen Echtzeitbereich des Kommunikationssystems. Der Hauptteilnehmer weist zwei Linien P1 und P2 für entsprechende Datenleitungen auf. Bei dem Nebenteilnehmer 4b handelt es sich bei dieser Ausführungsform um eine I/O-Schnittstelle. Das Bezugszeichen 21 bezieht sich auf eine Ankoppelung für den (topologischen) Nichtechtzeitbereich, beispielsweise in Form von Ethernet (Office) und das Bezugszeichen 5 bezieht sich auf eine Datenleitung.

In Figur 2 werden die Datenflüsse zwischen den einzelnen Teilnehmern gezeigt. Dabei werden zwischen dem Hauptteilnehmer 3 und den Nebenteilnehmern 4, 4a, 4b und 4c echtzeitkritische Daten ausgetauscht, was durch den Echtzeitkanal 13 (RT-Channel) veranschaulicht ist. Daneben werden auch nichtechtzeitkritische Daten über einen IP-Channel 14 zwischen den einzelnen Teilnehmern ausgetauscht. Dies ist etwa dann der Fall, wenn Zugriff auf die einzelnen Teilnehmer des Kommunikationssystems, z. B. durch PCs gewünscht wird.

Bei der in Figur 3 gezeigten Ausführungsform wird eine Situation gezeigt, in der PCs 27 und 28 eingesetzt werden, die keine direkte Ankoppelung an das Echtzeitkommunikationssystem besitzen. Diese PCs müssen über Koppelbaugruppen an das System angekoppelt werden. Dabei ist es aus dem Stand der Technik bekannt, dass die mit 27 und 28 gekennzeichneten Nichtechtzeitteilnehmer durch Netzwerkteilnehmer an das Kommunikationssystem angekoppelt werden. Auch eine Ankoppelung eines PCs an "Ethernet (Office)" ist üblich. Dabei übernehmen die einzelnen Echtzeitkommunikationsteilnehmer die Koppelfunktion. Bei der in Figur 3 gezeigten Darstellung werden die PCs über den Eingang P1 oder den letzten Nebenteilnehmer 4c angekoppelt. Zur Ankopplung ist es bei diesen Systemen nötig, dass die einzelnen Teilnehmer die zeitliche Aufteilung der jeweiligen Kommunikationszyklen beziehungsweise die Positionen des IP- und des RT-Channels kennen.

Der in Fig. 3 gezeigte letzte Teilnehmer 4c verwendet seine interne Brückenfunktion. Dadurch wird erreicht, dass der RT-Channel nicht durch IP-Daten der Telegramme gestört wird. Der Hauptteilnehmer 3 unterstützt die IP-Datenübertragung über den Eingang P1.

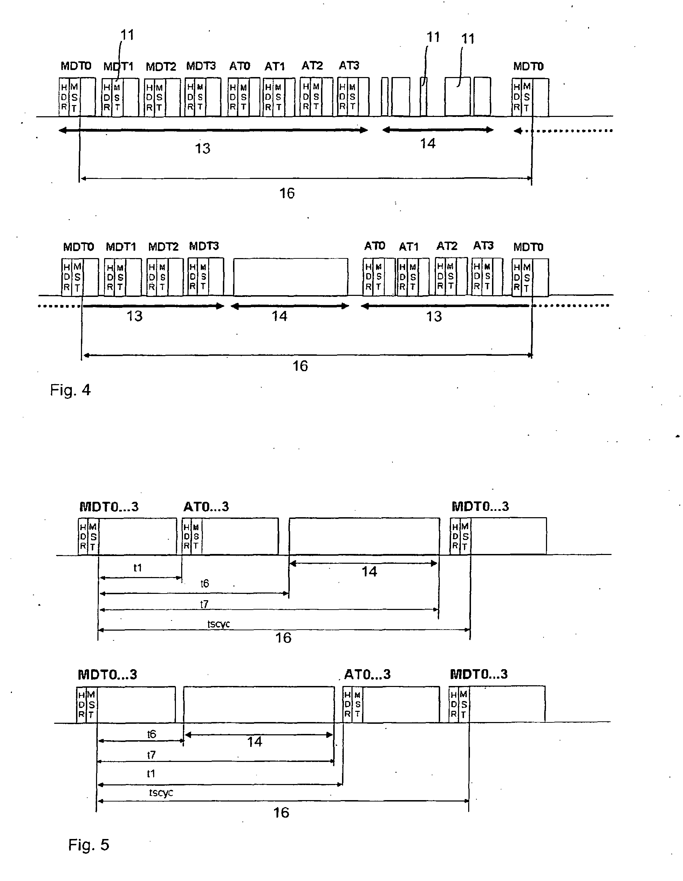

Figur 4 zeigt eine Darstellung eines Kommunikationszyklus 16. Bei der oberen Ausführungsform weist dieser Kommunikationszyklus 16 einen Echtzeitteil 13 und einen Nichtechtzeitteil 14 auf, wobei innerhalb dieser Teile jeweils Datentelegramme 11 angeordnet sind. Bei der unteren Darstellung weist der Kommunikationszyklus 16 einen Nichtechtzeitteil auf, der zwischen zwei Echtzeitteilen 13 angeordnet ist.

Innerhalb des Echtzeitteils befinden sich Datenfelder (HDR/MST) zur Synchronisation und Verwaltung.

Wie in den Figuren 4 und 5 gezeigt, ist die Lage des IP-Channels beziehungsweise Nichtechtzeitteils innerhalb des Kommunikationszyklus 16 durch einen vorgegebenen konstanten Zeitbereich definiert. Dieser Zeitbereich wird üblicherweise von dem Hauptteilnehmer vorgegeben. Dabei ist es möglich, die Lage dieses IP-Channels beispielsweise innerhalb einer Initialisierungsphase von dem Hauptteilnehmer an dem Nebenteilnehmer zu übertragen.

Im Stand der Technik wird den Nebenteilnehmern die Lage des IP-Channels von dem Hauptteilnehmer als so genannter Parameter explizit übertragen. Daher müssen die Nebenteilnehmer, wie oben erwähnt, einen zugreifbaren Parameterspeicher besitzen, den die Hauptstation beschreiben kann. Die Zeiten t6 und t7 in Figur 5 sind im Gegensatz hierzu erfindungsgemäß diejenigen Parameter, die die Lage des IP-Channels innerhalb des Kommunikationszyklus beschreiben, da die Zeit t6 den Startzeitpunkt des Nichtechtzeitteils 14 und die Zeit t7 den Endzeitpunkt des Nichtechtzeitteils 14 darstellt. Die Zeit tscyc stellt die Gesamtzeit des Kommunikationszyklus 16 dar.

Um eine Störung der Echtzeitkommunikation zu vermeiden, werden durch die Koppelbaugruppen Datentelegramme aus dem Nichtechtzeitbereich, der in Figur 3 mit dem Bezugszeichen 7 gekennzeichnet ist, in den Echtzeitbereich derart eingekoppelt, dass die Echtzeitkommunikation nicht gestört wird. Dies bedeutet, dass die Daten in den IP-Channel eingespeist werden müssen. Daneben können, wie oben erwähnt, auch Datentelegramme aus dem IP-Channel und optional auch aus dem RT-Channel in den Nichtechtzeitbereich 7 eingespeist werden.

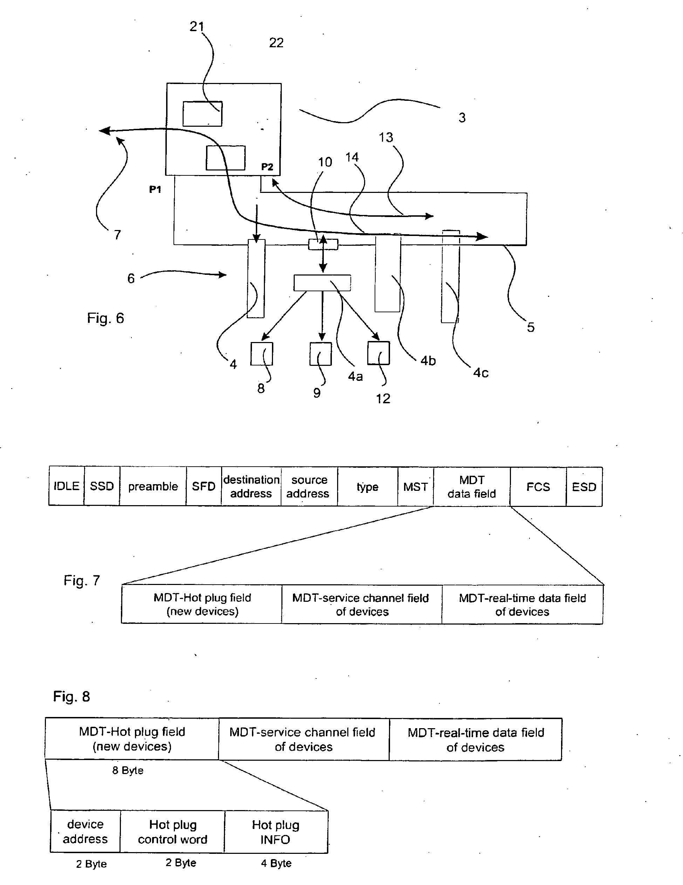

Figur 6 zeigt eine erfindungsgemäße Kommunikationsvorrichtung mit einer Koppelbaugruppe 10. Im Gegensatz zu aus dem Stand der Technik bekannten Koppelbaugruppen, wird erfindungsgemäß eine eigene Koppelbaugruppe (auch als IP T-Plug bezeichnet) beschrieben, die für die hier vorliegenden Kommunikationssysteme, die eine Mischung aus Repeaterfunktion und geschalteter Buskommunikation beinhalten, bisher nicht bekannt war.

Im Gegenstand zu den aus dem Stand der Technik bekannten Koppelbaugruppen stellt die erfindungsgemäße Koppelbaugruppe keinen Netzwerkteilnehmer mit eigener Netzwerkadresse dar. Sie ist somit auch nicht als Knoten im Kommunikationsnetz sichtbar, sondern routet nur transparent die Daten vom Nichtechtzeitbereich (in Figur 6 als Ethernet-Switch 4a mit drei Teilnehmern 8, 9 und 12 dargestellt) in den IP-Channel im Echtzeitbereich. Diese Koppelbaugruppe 10 beinhaltet dabei keine einzustellenden Parameter, sondern ermittelt die nötigen Parameter, bei denen es sich, wie oben ausgeführt, wenigstens um die Parameter t6 und t7 handelt, selbständig. Vorteilhaft wird auch der Wert für die Zeitspanne tscyc ermittelt. Damit handelt es sich bei der erfindungsgemäßen Koppelbaugruppe 10 um ein bezüglich der Echtzeitkommunikation passives Element. Diese Koppelbaugruppe bearbeitet nur den IP-Channel, weshalb, wie oben erwähnt, die Zeiten t6 und t7 ausgewertet werden müssen. Daneben muss auch das Telegramm MDT 0, welches in Figur 4 und 5 dargestellt ist, ausgewertet werden. Ein IP-Telegramm sollte wegen des zeitlichen Versatzes (Ring delay) von P- und S-Kanal nur in einen Kanal (P oder S) eingespeist werden, um die gesamte Vorrichtung einfacher realisieren zu können.

Die Figuren 7 und 8 beschreiben eine selbstlernende Koppelbaugruppe mit Verwendung inhaltlicher Telegrammauswertung. Wird innerhalb eines zyklischen Kanals die Information über die Lage des IP-Channels an einer für die Koppelbaugruppe bekannten Position in Datentelegrammen übertragen, so kann die Koppelbaugruppe durch diese inhaltliche Auswertung der Telegramminhalte die zeitliche Lage des IP-Channels ermitteln.

Wie Figur 7 zeigt, könnte zu diesem Zweck beispielsweise das bei SERCOS III (Serial Real-Time Communication System) auftretende so genannte Hot-Plug-Feld verwendet werden. Bei SERCOS III wird neben Datenteilen wie der Quelladresse (source address), der Zieladresse (destination address), der Präambel (preamble), dem FCS (frame check sequence) Datenfeld, auch das MDT-Datenfeld (MDT Datafield) übertragen. Dieses MDT-Datenfeld setzt sich aus einen MDT-Hot-Plug-Feld, welches normalerweise zur Aufnahme neu hinzukommender Teilnehmer verwendet wird, dem MDT-Service-Channel Field of devices und dem MDT Real Time Data Field of devices zusammen.

Wie Figur 8 zeigt, setzt sich das so genannte MDT-Hot-Plug-Feld wiederum aus Unterfeldern zusammen, die für die Geräteadresse, ein Steuerwort und ein Infofeld gedacht sind.

In einer bevorzugten Ausführungsform wird vorgeschlagen, dass letzteres Hot-Plug-Infofeld mit den Zeiten t6 und t7 belegt wird. Diese und weitere Daten werden in dem Feld bevorzugt gemultiplext übertragen, solange kein neuer Teilnehmer aufgenommen werden soll. Damit kann während dieser Zeit eine Koppelbaugruppe die Zeiten durch Auswertung des gesamten Datentelegramms ermitteln.

Figur 8 zeigt für das Multiplexen eine mögliche Vereinbarung für das oben genannte Hot-Plug-Controlword. Von besonderer Bedeutung sind dabei die beiden Codierungen für t6 und t7, die durch die Koppelbaugruppe ausgewertet werden, wobei in diesem Beispiel die Daten nur in dem Fall MHP-ADR = 0xFF relevant sind, was bedeutet, dass kein neuer Teilnehmer aufgenommen werden soll. Daneben können auch die Werte für tscyc und t1 übertragen werden.

Bei dieser Ausführungsform wird damit bevorzugt Information innerhalb eines vorgegebenen Datenfeldes gemultiplext.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Echtzeitkommunikationssystem
- 3: Hauptteilnehmer
- 4, 4a, 4b ,4c: Nebenteilnehmer
- 5: Datenleitung
- 6: Echtzeitbereich
- 7: Nichtechtzeitbereich
- 8, 9, 12: Teilnehmer
- 10: Koppelbaugruppe
- 11: Datentelegramme
- 13: Echtzeitteil
- 14: Nichtechtzeitteil
- 16: Kommunikationszyklus
- 21: Ankoppelung für den Nichtechtzeitbereich
- 27, 28: PCs
- tscyc: Gesamtzeit eines Kommunikationszyklus
- t6: Startzeitpunkt des Nichtechtzeitteils
- t7: Endzeitpunkt des Nichtechtzeitteils

## Patentansprüche

1. Verfahren zur Datenübertragung über Datennetzwerke (1) mit wenigstens zwei Teilnehmern (3, 4), wobei die Datennetzwerke wenigstens einen topologischen Echtzeitbereich (6) und einen topologischen Nichtechtzeitbereich (7) aufweisen und über die Datennetzwerke (1) versendete Datentelegramme (11) eine Kennung aufweisen, die für Echtzeittelegramme und Nichtechtzeittelegramme verschieden ist,
wobei Datentelegramme aus dem Nichtechtzeitbereich (7), die innerhalb des Echtzeitteils (13) eintreffen, durch eine Koppelbaugruppe (10) zeitlich verzögert und in den Nichtechtzeitteil (14) übertragen werden **dadurch gekennzeichnet , dass** die Koppelbaugruppe (10) die Datenübertragung über das Datennetzwerk (1) mit einer Mischung aus Repeaterfunktion und Schaltfunktion vornimmt.

2. Verfahren nach Anspruch 1,
**dadurch gekennzeichnet, dass**
Datentelegramme aus dem Nichtechtzeitteil (14) entnommen und in den Echtzeitbereich (6) übertragen werden.

3. Verfahren nach wenigstens einem der vorangegangenen Ansprüche,
**dadurch gekennzeichnet, dass**
Datentelegramme aus dem Echtzeitteil (13) entnommen und in den Nichtechtzeitbereich (7) übertragen werden.

4. Verfahren nach wenigstens einem der vorangegangenen Ansprüche,
**dadurch gekennzeichnet, dass**
die Datenübertragung in Kommunikationszyklen (16) stattfindet.

5. Verfahren nach Anspruch 4,
**dadurch gekennzeichnet, dass**
die Kommunikationszyklen (16) eine vorgegebene konstante Zykluszeitspanne (tz) aufweisen.

6. Verfahren nach wenigstens einem der vorangegangenen Ansprüche,
**dadurch gekennzeichnet, dass**
der Nichtechtzeitteil (14) innerhalb eines Kommunikationszyklus (16) veränderbar festgelegt ist.

7. Verfahren nach wenigstens einem der vorangegangenen Ansprüche,
**dadurch gekennzeichnet, dass**
die Koppelbaugruppe Parameter (t6, t7) ermittelt, die für die Position wenigstens des Nichtechtzeitteils innerhalb eines Kommunikationszyklusses (16) charakteristisch sind.

8. Verfahren nach Anspruch 7,
**dadurch gekennzeichnet, dass**
die Parameter aus einer Gruppe von Parametern ausgewählt sind, welche die Startzeitpunkte (t6) des Nichtechtzeitteils (14), die Endzeitzeitpunkte (t7) des Nichtechtzeitteils (13), die zeitliche Länge des Nichtechtzeitteils, die zeitliche Länge des Echtzeitteils und dergleichen enthält.

9. Verfahren nach einem der vorangegangenen Ansprüche 7 - 8.
**dadurch gekennzeichnet, dass**
die Position des Nichtechtzeitteils (14) durch Auswertung der Empfangszeitpunkte von empfangenen Telegrammen ermittelt wird.

10. Verfahren nach einem der vorangegangenen Ansprüche 7 - 9.
**dadurch gekennzeichnet, dass**
die Position des Nichtechtzeitteils durch Auswertung der Empfangszeitpunkte von empfangenen Nichtechtzeittelegrammen ermittelt wird.

11. Verwendung eines ethemetbasierten Kommunikationssystems zur Durchführung eines Verfahrens nach wenigstens einem der vorangegangenen Ansprüche.

12. Verwendung eines Echtzeitkommunikationssystems zur Durchführung eines Verfahrens nach wenigstens einem der Ansprüche 1-10.

13. Kommunikationsvorrichtung zur Übertragung von Daten, wobei die Kommunikationsvorrichtung wenigstens einen ersten Teilnehmer (3) und wenigstens einen zweiten Teilnehmer (4) sowie eine Koppelbaugruppe (10) zur Anbindung des ersten Teilnehmers (3) an den zweiten Teilnehmer (4) aufweist, und wobei die Kommunikationsvorrichtung wenigstens einen Echtzeitbereich (6) und einen Nichtechtzeitbereich (7) aufweist und von der Kommunikationsvorrichtung übertragene Datentelegramme (11) eine Kennung aufweisen, die für Echtzeittelegramme und Nichtechtzeittelegramme verschieden ist,
wobei die Koppelbaugruppe (10) eine Steuerungseinrichtung aufweist, die bewirkt, dass Datentelegramme aus dem Nichtechtzeitbereich (7), die innerhalb des Echtzeitteils (13) bei der Koppelbaugruppe (10) eintreffen, zeitlich verzögert und in den Nichtechtzeitteil (14) eines Kommunikationszyklusses (16) übertragen werden,
**dadurch gekennzeichnet, dass** die Koppelbaugruppe (10) derart ausgestaltet ist, dass sie die Datenübertragung über das Datennetzwerk (1) mit einer Mischung aus Repeaterfunktion und Schaltfunktion vornimmt.

14. Kommunikationsvorrichtung nach Anspruch 13,
**dadurch gekennzeichnet, dass**
die Steuereinrichtung bewirkt, dass Datentelegramme aus einem Nichtechtzeitteil (14) entnommen und in den Echtzeitbereich übertragen werden.

15. Kommunikationsvorrichtung nach Anspruch 13 oder 14,
**dadurch gekennzeichnet, dass**
die Steuereinrichtung bewirkt, dass Datentelegramme aus einem Echtzeitteil (13) entnommen und in den Nichtechtzeitbereich (7) übertragen werden.

16. Kommunikationsvorrichtung nach wenigstens einem der vorangegangenen Ansprüche 13-15,
**dadurch gekennzeichnet, dass**
die Koppelbaugruppe (10) selbständig Parameter ermittelt, die für die Position des Nichtechtzeitteils (14) innerhalb der Kommunikationszyklen (16) charakteristisch sind.

17. Koppelbaugruppe zur Anbindung eines ersten Teilnehmers (3) an einen zweiten Teilnehmer (4) einer Kommunikationsvorrichtung zur Übertragung von Daten, wobei die Kommunikationsvorrichtung eine Vielzahl von Teilnehmern und wenigstens einen Echtzeitbereich (6) und wenigstens einen Nichtechtzeitbereich (7) aufweist, wobei von der Kommunikationsvorrichtung übertragene Datentelegramme (11) eine Kennung aufweisen, die für Echtzeittelegramme und Nichtechtzeittelegramme verschieden ist,
wobei die Koppelbaugruppe (10) eine Steuerungseinrichtung aufweist, die bewirkt, dass Datentelegramme aus dem Nichtechtzeitbereich (6), die innerhalb des zeitlichen Echtzeitteils bei der Koppelbaugruppe (10) eintreffen, zeitlich verzögert und in den Nichtechtzeitteil eingefügt werden, **dadurch gekennzeichnet, dass** die Koppelbaugruppe (10) derart ausgestaltet ist, dass sie eine Datenübertragung mittels der Kommunikationsvorrichtung mit einer Mischung aus Repeaterfunktion und Schaltfunktion vornimmt.

## Claims

1. Method for transmitting data by data networks (1) having at least two subscribers (3, 4), wherein the data networks have at least one topological real-time domain (6) and a topological non-real-time domain (7), and data messages (11) sent by the data networks (1) have an identifier which is different for real-time messages and non-real-time messages,
wherein data messages from the non-real-time domain (7) which arrive within the real-time portion (13) are delayed in time by a switching assembly (10) and are transmitted to the non-real-time portion (14), **characterized in that** the switching assembly (10) performs the data transmission via the data network (1) using a mixture of a repeater function and a switching function.

2. Method according to Claim 1,
**characterized in that**
data messages are removed from the non-real-time portion (14) and transmitted to the real-time domain (6).

3. Method according to at least one of the preceding claims,
**characterized in that**
data messages are removed from the real-time portion (13) and transmitted to the non-real-time domain (7).

4. Method according to at least one of the preceding claims,
**characterized in that**
the data transmission takes place in communication cycles (16).

5. Method according to Claim 4,
**characterized in that**
the communication cycles (16) have a prescribed constant cycle interval (tz).

6. Method according to at least one of the preceding claims,
**characterized in that**
the non-real-time portion (14) is defined so as to be able to be altered within a communication cycle (16).

7. Method according to at least one of the preceding claims,
**characterized in that**
the switching assembly ascertains parameters (16, 17) which are characteristic of the position of at least the non-real-time portion within a communication cycle (16).

8. Method according to Claim 7,
**characterized in that**
the parameters are selected from a group of parameters which contains the starting times (t6) of the non-real-time portion (14), the ending times (t7) of the non-real-time portion (13), the temporal length of the non-real-time portion, the temporal length of the real-time portion and the like.

9. Method according to one of the preceding Claims 7-8,
**characterized in that**
the position of the non-real-time portion (14) is ascertained by evaluating the reception times of received messages.

10. Method according to one of the preceding Claims 7-9,
**characterized in that**
the position of the non-real-time portion is ascertained by evaluating the reception times of received non-real-time messages.

11. Use of an Ethernet-based communication system for performing a method according to at least one of the preceding claims.

12. Use of a real-time communication system for performing a method according to at least one of Claims 1-10.

13. Communication apparatus for transmitting data, wherein the communication apparatus has at least one first subscriber (3) and at least one second subscriber (4) and also a switching assembly (10) for linking the first subscriber (3) to the second subscriber (4), and wherein the communication apparatus has at least one real-time domain (6) and a non-real-time domain (7), and data messages (11) transmitted by the communication apparatus have an identifier which is different for real-time messages and non-real-time messages, wherein the switching assembly (10) has a control device which prompts data messages from the non-real-time domain (7) which arrive at the switching assembly (10) within the real-time portion (13) to be delayed in time and transmitted to the non-real-time portion (14) of a communication cycle (16), **characterized in that** the switching assembly (10) is in a form such that it performs the data transmission via the data network (1) using a mixture of a repeater function and a switching function.

14. Communication apparatus according to Claim 13,
**characterized in that**
the control device prompts data messages to be removed from a non-real-time portion (14) and transmitted to the real-time domain.

15. Communication apparatus according to Claim 13 or 14,
**characterized in that**
a control device prompts data messages to be removed from a real-time portion (13) and transmitted to the non-real-time domain (7).

16. Communication apparatus according to at least one of the preceding Claims 13-15,
**characterized in that**
the switching assembly (10) automatically ascertains parameters which are characteristic of the position of the non-real-time portion (14) within the communication cycles (16).

17. Switching assembly for linking a first subscriber (3) to a second subscriber (4) of a communication apparatus for transmitting data, wherein the communication apparatus has a multiplicity of subscribers and at least one real-time domain (6) and at least one non-real-time domain (7), wherein data messages (11) transmitted by the communication apparatus have an identifier which is different for real-time messages and non-real-time messages,
wherein the switching assembly (10) has a control device which prompts data messages from the non-real-time domain (6) which arrive at the switching assembly (10) within the temporal real-time portion to be delayed in time and inserted into the non-real-time portion, **characterized in that** the switching assembly (10) is in a form such that it performs data transmission by means of the communication apparatus using a mixture of a repeater function and a switching function.

## Revendications

1. Procédé de transmission de données par des réseaux de données (1) qui présentent au moins deux participants (3, 4),
le réseau de données présentant au moins un domaine topologique (6) en temps réel et un domaine topologique (7) non en temps réel,
les télégrammes de données (11) envoyés par les réseaux de données (1) présentant une caractéristique qui diffère selon que le télégramme est en temps réel ou n'est pas en temps réel,
les télégrammes de données qui proviennent du domaine (7) non en temps réel et qui pénètrent à l'intérieur de la partie (13) en temps réel étant retardés par un module de couplage (10) et étant transférés dans la partie (14) non en temps réel, **caractérisé en ce que**
le module de couplage (10) assure le transfert des données par le réseau de données (1) à l'aide d'un mélange d'une fonction de répétition et d'une fonction de commutation.

2. Procédé selon la revendication 1, **caractérisé en ce que** les télégrammes de données sont repris dans la partie (14) non en temps réel et sont transférés dans le domaine (6) en temps réel.

3. Procédé selon au moins l'une des revendications précédentes, **caractérisé en ce que** les télégrammes de données sont repris dans la partie (13) en temps réel et sont transférés dans le domaine (7) non en temps réel.

4. Procédé selon au moins l'une des revendications précédentes, **caractérisé en ce que** le transfert des données a lieu dans des cycles de communication (16).

5. Procédé selon la revendication 4, **caractérisé en ce que** les cycles de communication (16) présentent une durée de cycle (tz) constante.

6. Procédé selon au moins l'une des revendications précédentes, **caractérisé en ce que** la partie (14) non en temps réel est définie de manière variable à l'intérieur d'un cycle de communication (16).

7. Procédé selon au moins l'une des revendications précédentes, **caractérisé en ce que** le module de couplage détermine des paramètres (t6, t7) caractéristiques de la position d'au moins la partie non en temps réel à l'intérieur d'un cycle de communication (16).

8. Procédé selon la revendication 7, **caractérisé en ce que** les paramètres sont sélectionnés dans un groupe de paramètres qui contient les instants de départ (t6) de la partie (14) non en temps réel, les instants finaux (t7) de la partie (13) non en temps réel, la longueur temporelle de la partie non en temps réel, la longueur temporelle de la partie en temps réel et similaires.

9. Procédé selon l'une des revendications 7 et 8 qui précèdent, **caractérisé en ce que** la position de la partie (14) non en temps réel est déterminée par évaluation des instants de réception des télégrammes reçus.

10. Procédé selon l'une des revendications 7 à 9 qui précèdent, **caractérisé en ce que** la position de la partie non en temps réel est déterminée par évaluation des instants de réception des télégrammes non en temps réel reçus.

11. Utilisation d'un système de communication sur base Ethernet en vue de l'exécution d'un procédé selon au moins l'une des revendications précédentes.

12. Utilisation d'un système de communication en temps réel en vue de l'exécution d'un procédé selon au moins l'une des revendications 1 à 10.

13. Dispositif de communication destiné à transmettre des données, le dispositif de communication présentant
au moins un premier participant (3) et au moins un deuxième participant (4) ainsi qu'un module de couplage (10) qui relie le premier participant (3) au deuxième participant (4),
le dispositif de communication présentant au moins un domaine (6) en temps réel et un domaine (7) non en temps réel et les télégrammes de données (11) transmis par le dispositif de communication présentant une caractéristique qui diffère selon que le télégramme est en temps réel ou non en temps réel,
le module de couplage (10) présentant un dispositif de commande qui a pour effet que les télégrammes de données qui proviennent du domaine (7) non en temps réel et qui pénètrent dans la partie (13) en temps réel par le module de couplage (10) sont retardés et transférés dans la partie (14) non en temps réel d'un cycle de communication (16),
**caractérisé en ce que**
le module de couplage (10) est configuré de manière à assurer le transfert de données par le réseau de données (1) à l'aide d'un mélange d'une fonction de répétition et d'une fonction de commutation.

14. Dispositif de communication selon la revendication 13, **caractérisé en ce que** le dispositif de commande a pour effet que les télégrammes de données sont prélevés dans la partie (14) non en temps réel et sont transférés dans le domaine en temps réel.

15. Dispositif de communication selon les revendications 13 ou 14, **caractérisé en ce que** le dispositif de commande a pour effet que les télégrammes de données sont prélevés dans une partie (13) en temps réel et sont transférés dans le domaine (7) non en temps réel.

16. Dispositif de communication selon au moins l'une des revendications 13 à 15 qui précèdent, **caractérisé en ce que** le module de couplage (10) détermine de manière autonome des paramètres caractéristiques de la position de la partie (14) non en temps réel à l'intérieur des cycles de communication (16).

17. Module de couplage destiné à relier un premier participant (3) à un deuxième participant (4) d'un dispositif de communication en vue de la transmission de données, le dispositif de communication présentant
plusieurs participants et au moins un domaine (6) en temps réel et au moins un domaine (7) non en temps réel,
les télégrammes de données (11) transmis par le dispositif de communication présentant une caractéristique qui diffère selon que les télégrammes sont en temps réel ou non en temps réel,
le module de couplage (10) présentant un dispositif de commande qui a pour effet que les télégrammes de données qui proviennent du domaine (6) non en temps réel et qui pénètrent à l'intérieur de la partie en temps réel du module de couplage (10) sont retardés et insérés dans la partie non en temps réel, **caractérisé en ce que**
le module de couplage (10) est configuré de manière à assurer un transfert de données au moyen du dispositif de communication à l'aide d'un mélange d'une fonction de répétition et d'une fonction de commutation.
